# EUROPÄISCHE PATENTANMELDUNG

(11) **EP 3 718 990 A1**
(43) Veröffentlichungstag der Anmeldung: **07.10.2020**
(21) Anmeldenummer: 20163953.1
(22) Anmeldetag: 18.03.2020
(51) Int. Cl.: C05G 5/16, C05G 5/40, C05G 5/30

(54) **SCHNUR**

(30) Priorität: 01.04.2019 DE 102019108422
(71) Anmelder: Holderrieth, Roland, 74153 Schwaigern (DE)
(72) Erfinder: Holderrieth, Roland, 74153 Schwaigern (DE)
(74) Vertreter: Kesselhut, Wolf

(57) **Zusammenfassung**

Eine Schnur, insbesondere Heftschnur (1) zum Zusammenheften des Blattwerks von Pflanzen, insbesondere von Weinreben umfasst einen Grundkörper (2) aus biologisch abbaubarem Material, die sich dadurch auszeichnet, dass der Grundkörper (2) ein Düngemittel (3) enthält.

Verwendung der Schnur als Heftschnur zum Ausrichten des Blattwerks von entlang einer Reihe angeordneten Weinbergreben.

Verwendung der Schnur als zu Zusammenheften von zu Ballen geformtem biologischem Material, insbesondere Heu- oder Strohballen oder von Grünschnitt.

## Beschreibung

Die Erfindung betrifft eine Schnur aus biologisch abbaubarem Material, insbesondere eine Heftschnur zum Zusammenheften des Blattwerks von Pflanzen gemäß dem Oberbegriff von Anspruch 1.

Beim Anbau von Weinreben wird das Blattwerk der Sträucher üblicherweise maschinell aufgerichtet und zusammengeheftet. Dazu werden auf beiden Seiten des Blattwerks einer Reihe von Rebstöcken Heftschnüre gespannt, die mit Hilfe von Heftklammern zwischen den einzelnen Pflanzen verbunden werden. Die verwendeten Heftschnüre sind aufgrund der geforderten Festigkeit meist aus Kunststoff gefertigt und haben dadurch den Nachteil, dass sie nur sehr langsam oder gar nicht auf natürlichem Weg zersetzt werden können, bzw. verrotten. Nach der Ernte können die Heftschnüre aus diesem Grunde nicht durch die zum Abtrennen des Blattwerks eingesetzten automatischen Rebschnittmaschinen zerkleinert werden, sondern müssen in aufwändiger Weise zuvor von Hand aus dem Blattwerk entfernt werden. Obgleich es im Stand der Technik bekannt ist, beispielsweise zum Verpacken von Paketen Schnüre aus verrottbarem Werkstoff, beispielsweise Hanf, einzusetzen, ist deren Verwendung auf dem Gebiet des Weinbaus bisher nicht bekannt.

Unabhängig davon ist es bisher nicht bekannt, Schnüre, insbesondere die auf dem Gebiet des Weinbaus eingesetzten Heftschnüre mit Düngemittel zu versetzen, welches nach dem Zerkleinern der Schnüre, insbesondere mittels einer Schnittmaschine, durch Feuchtigkeit in den Boden gelangt und dort das Wachstum der Pflanzen fördert.

Demgemäß ist es eine Aufgabe der vorliegenden Erfindung, eine Schnur, insbesondere Heftschnur zu schaffen, die biologisch abbaubar ist und darüber hinaus ein Düngemittel enthält, das durch den biologischen Abbauprozess freisetzbar ist.

Diese Aufgabe wird erfindungsgemäß durch eine Schnur mit den Merkmalen von Anspruch 1 gelöst.

Eine weitere Aufgabe der Erfindung besteht darin, eine neuartige Verwendung für eine biologisch abbaubare Schnur anzugeben.

Diese Aufgabe wird erfindungsgemäß durch die Merkmale von Anspruch 10 gelöst.

Weitere Merkmale der Erfindung sind in den Unteransprüchen beschrieben.

Gemäß der Erfindung umfasst eine Schnur, insbesondere eine Heftschnur zum Zusammenheften des Blattwerks von Pflanzen, wie Weinreben, einen Grundkörper aus verrottbarem, d.h. biologisch abbaubarem, Material. Die erfindungsgemäße Schnur zeichnet sich dadurch aus, dass der Grundkörper ein Düngemittel enthält.

Durch den erfindungsgemäßen Einsatz von biologisch abbaubaren, Schnüren, d.h. beispielsweise Heftschnüren für Pflanzen, die durch die Einwirkung von Wasser, Licht und natürlichen Bakterien in der Luft und/oder im Boden innerhalb von 1 bis zwei Wachstumsperioden der Pflanzen, d.h. einigen Monaten, bis hin zu wenigen Jahren, z.B. 1 bis 2 Jahren, zum größten Teil verrotten, und die erfindungsgemäß ein Düngemittel enthalten, ergibt sich der Vorteil, dass diese beim Schnitt des Blattwerks von Pflanzen, insbesondere von Weinreben, am Ende der Ernteperiode maschinell in einem Arbeitsgang mit dem Blattwerk zerkleinert werden können und mit diesem zu Boden fallen, wo sie zum einen durch den Einfluss von Feuchtigkeit und Bioorganismen verwittern und zum anderen gleichzeitig in den Boden gelangen in welchem sie von den Pflanzen wachstumsfördernd aufgenommen werden.

Die Erfindung ist jedoch nicht auf die zuvor beschriebenen Heftschnüre für Pflanzen beschränkt sondern schließt alle Schnüre ein, die aus einem verottbaren Werkstoff bestehen, welcher nach dem Einsatz der Schnüre, durch Mikroorganismen biologisch abgebaut wird. Eine mögliche weitere Verwendung ist z.B. der Einsatz der Schnüre zum Zusammenhalten von biologischem Material in Ballenform, insbesondere von Heu oder Stroh in Ballenform, welches zum Bedecken von Stallböden eingesetzt und nach dem Gebrauch in Form von Mist auf Feldern ausgebracht wird.

Zudem können die erfindungsgemäßen Schnüre dazu verwendet werden, Gartenmaterialien wie z.B. Grünschnitt für den Transport zusammen zu heften, welcher dadurch auf den entsprechenden Grünschnitt-Sammelplätzen ohne die Schnüre zu entfernen zerkleinert und kompostiert werden kann.

In einer bevorzugten Ausführungsform der Erfindung besteht der Grundkörper der Schnur selbst aus Naturfasern, die leicht biologisch abbaubar sind. Die Naturfasern können beispielsweise Hanf-, Mais-, Kokos- oder Cellulosefasern sein. In dieser Ausführungsform ist weiterhin bevorzugt der gesamte Grundkörper der Heftschnur mit dem Düngemittel getränkt, welches hierzu zuvor in einem entsprechenden Lösungsmittel, z.B. Wasser, gelöst und anschließend auf die Fasern verbracht wird. Alternativ kann das Düngemittel jedoch auch bei der Fertigung des Grundkörpers den Naturfasern als Pulver beigegeben werden, bevor diese insbesondere in bekannter Weise durch Verdrillen zu einer endlosen Schnur geformt werden.

In einer weiteren bevorzugten Ausführungsform umfasst der Grundkörper der Schnur eine Seele und einen die Seele umschließenden Mantel. Hierbei besteht der Mantel, wie bei der zuvor beschriebenen Ausführungsform, aus Naturfasern wie Hanf-, Mais, Kokos- oder Cellulosefasern. Hanffasern eignen sich besonders, da diese nach dem Zerschneiden der Heftschnur aufspleißen und eine sehr große Oberfläche bilden, was den Zersetzungsprozess beschleunigt. Die innerhalb des Mantels aufgenommene Seele des Grundkörpers besteht demgegenüber erfindungsgemäß aus dem Düngemittel oder enthält ein solches. Dieses Düngemittel ist bevorzugt ein Mehrnährstoffdünger, der Kalium und/oder Phosphat und/oder Calcium oder auch gebundenen Stickstoff enthält.

Weiterhin kann es insbesondere bei der Verwendung als Heftschnur vorgesehen sein, dass auf die Oberfläche des Grundkörpers eine wasserabweisende Schicht aufgebracht ist, bevorzugt eine Schicht aus biologisch abbaubarem Harz oder Wachs. Durch diese Schicht wird erreicht, dass die Zersetzung der Heftschnur erst nach dem Durchtrennen derselben bei der maschinellen Ernte beginnt. Hierbei wird die Heftschnur durch die rotierenden Messer der bekannten automatischen Rebschnittmaschinen in kleine Stücke mit einer Länge von z.B. 0,5 cm bis 2 cm oder mehr zerteilt, was dazu führt, dass Wasser und Bakterien in das Innere derselben eindringen können, die die Naturfasern zersetzen. Folglich tritt das Düngemittel aus und gelangt über Niederschlagswasser oder Tau in den Nährboden der Pflanzen/Weinreben. Auf diese Weise können der zusätzliche Schritt, bei dem die Heftschnüre üblicherweise vor dem Schnitt von Hand aus den Weinreben herausgezogen werden müssen, und ein weiteres Düngen des Bodens entfallen, wodurch sich eine erhebliche Zeit- und Kostenersparnis ergibt.

Die erfindungsgemäße Schnur wird bei der Verwendung als Heftschnur bevorzugt dazu verwendet, das Blattwerks von entlang einer Reihe angeordneten Weinbergreben auszurichten. Dafür wird eine erste und eine zweite erfindungsgemäße Schnur an den Außenseiten des Blattwerks, welches zuvor z.B. durch zwei rotierende Schnecken aufgerichtet wurde, entlanggeführt und in regelmäßigen Abständen durch Heftelemente miteinander verbunden. Die Heftelemente, die z.B. als Klammern ausgeführt sein können, bestehen dabei bevorzugt auch aus biologisch abbaubarem Material, wie z.B. Maisstärke.

Die Erfindung wird nachfolgend mit Bezug auf die Zeichnungen anhand bevorzugter Ausführungsformen beschrieben. In den Zeichnungen zeigen:
- Fig. 1: eine schematische Darstellung einer ersten Ausführungsform der erfindungsgemäßen Schnur, und
- Fig. 2: eine Schnittdarstellung der Schnur von Fig. 1.

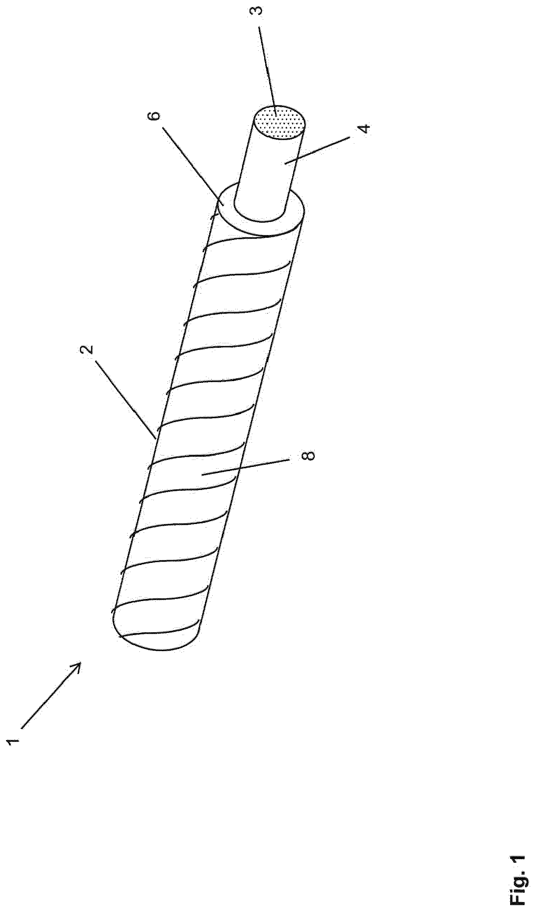

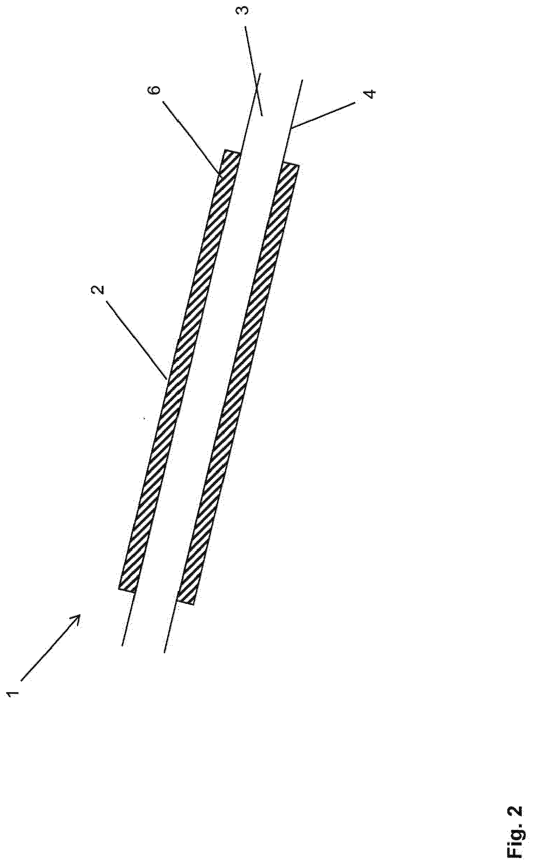

Wie in Fig. 1 gezeigt ist, umfasst eine Schnur 1, die insbesondere als Heftschnur zum Zusammenheften des Blattwerks von Pflanzen eingesetzt wird, einen Grundkörper 2 aus verrottbarem Material, der ein Düngemittel 3 enthält. Der Grundkörper 2 umfasst eine Seele 4 und einen die Seele 4 umschließenden Mantel 6. Wie in Fig. 2 dargestellt ist, besteht der Mantel 6 aus Naturfasern, insbesondere aus Hanf-, Mais-, Kokos- oder Cellulosefasem. Die Seele 4 des Grundkörpers 2 besteht in der dargestellten bevorzugten Ausführungsform der Schnur 1 hingegen aus Düngemittel 3. Auf die Oberfläche 8 des Grundkörpers 2 ist außerdem eine wasserabweisende Schicht aufgebracht, die bevorzugt aus biologisch abbaubarem Harz oder Wachs besteht. Um den biologischen Abbauprozess weiter zu beschleunigen, kann es vorgesehen sein, die Oberfläche der Schnur 1 vor und/oder während des Beschnitts zu erwärmen, um das Wachs bzw. Harz anzuschmelzen und weiter zu verflüssigen. Dies kann beispielsweise durch den Einsatz von Infrarotstrahlern erfolgen, die nahe der Schnittmesser einer Rebschnittmaschine angeordnet werden und die Schnur 1 bestrahlen.

**Liste der Bezugszeichen**
- 1: Erfindungsgemäße Schnur
- 2: Grundkörper
- 3: Düngemittel
- 4: Seele des Grundkörpers
- 6: Mantel des Grundkörpers
- 8: Oberfläche des Grundkörpers

## Patentansprüche

1. Schnur, insbesondere Heftschnur (1) zum Zusammenheften des Blattwerks von Pflanzen, umfassend einen Grundkörper (2) aus biologisch abbaubarem Material,
**dadurch gekennzeichnet, dass**
der Grundkörper (2) ein Düngemittel (3) enthält.

2. Schnur nach Anspruch 1,
**dadurch gekennzeichnet, dass**
der Grundkörper (2) aus Naturfasern, insbesondere aus Hanf-, Mais-, Kokos- oder Cellulosefasern, besteht.

3. Schnur nach Anspruch 2,
**dadurch gekennzeichnet, dass**
der Grundkörper (2) mit einem Düngemittel (3) getränkt ist.

4. Schnur nach Anspruch 1,
**dadurch gekennzeichnet, dass**
das der Grundkörper (2) eine Seele (4) und einen die Seele (4) umschließenden Mantel (6) umfasst.

5. Schnur nach Anspruch 4,
**dadurch gekennzeichnet, dass**
der Mantel (6) aus Naturfasern, insbesondere aus Hanf-, Mais-, Kokos- oder Cellulosefasern, besteht.

6. Schnur nach einem der Ansprüche 4 und 5,
**dadurch gekennzeichnet, dass**
die Seele (4) des Grundkörpers (2) aus Düngemittel (3) besteht oder ein solches enthält.

7. Schnur nach einem der vorhergehenden Ansprüche,
**dadurch gekennzeichnet, dass**
das Düngemittel (3) ein Mehrnährstoffdünger ist, der Kalium und/oder Phosphat und/oder Calcium oder auch gebundenen Stickstoff enthält.

8. Schnur nach einem der vorhergehenden Ansprüche,
**dadurch gekennzeichnet, dass**
auf die Oberfläche (8) des Grundkörpers (2) eine wasserabweisende Schicht aufgebracht ist, insbesondere eine Schicht aus biologisch abbaubarem Harz oder Wachs.

9. Schnur nach Anspruch 8,
**dadurch gekennzeichnet, dass**
das Wachs oder Harz durch Bestrahlen mit Infrarotstrahlung verflüssigbar ist.

10. Verwendung einer Schnur (1) nach einem der vorhergehenden Ansprüche als Heftschnur zum Ausrichten des Blattwerks von entlang einer Reihe angeordneten Weinbergreben.

11. Verwendung nach Anspruch 10,
**dadurch gekennzeichnet, dass**
eine erste und eine zweite Schnur (1) nach einem der Ansprüche 1 bis 9 auf den Außenseiten des Blattwerks entlanggeführt und in regelmäßigen Abständen durch Heftelemente miteinander verbunden sind.

12. Verwendung einer Schnur (1) nach einem der Ansprüche 1 bis 9 als zu Zusammenheften von zu Ballen geformtem biologischem Material, insbesondere Heu- oder Strohballen oder von Grünschnitt.
